# EUROPEAN PATENT SPECIFICATION

(11) **EP 3 114 342 B1**
(45) Date of publication and mention of the grant of the patent: **26.02.2025**
(21) Application number: 14712697.3
(22) Date of filing: 07.03.2014
(51) Int. Cl.: F02D 41/10, F02D 41/14, F02D 41/00

(54) **METHOD AND ARRANGEMENT FOR CONTROLLING AIR TO FUEL RATIO IN AN INTERNAL COMBUSTION ENGINE**
VERFAHREN UND ANORDNUNG ZUR STEUERUNG DES LUFT-KRAFTSTOFF-VERHÄLTNISSES IN EINEM VERBRENNUNGSMOTOR
PROCÉDÉ ET AGENCEMENT POUR COMMANDER UN RAPPORT AIR/CARBURANT DANS UN MOTEUR À COMBUSTION INTERNE

(43) Date of publication of application: 11.01.2017
(73) Proprietor: Wärtsilä Finland Oy, 65170 Vaasa (FI)
(72) Inventor: KAAS, Tom, FI-65100 Vaasa (FI); ÖSTMAN, Fredrik, FI-65100 Vaasa (FI)
(74) Representative: Berggren Oy
(86) International application number: PCT/FI2014/050170
(87) International publication number: WO 2015/132450

(56) References cited:
- EP-A1- 1 686 251
- EP-A1- 1 686 252
- WO-A1-03/065135
- US-A- 5 577 474
- US-A- 5 925 089

## Description

### TECHNICAL FIELD

The invention concerns in general the technology of internal combustion engines, such as large diesel engines. In particular the invention concerns the way in which the air to fuel ratio is controlled during and immediately after changes in operating conditions.

### BACKGROUND OF THE INVENTION

Many modern internal combustion engines, such as large diesel engines, include a forced induction device such as a turbocharger or a supercharger for forcing extra air into the combustion chamber. The air to fuel ratio, or AFR for short, describes the relative amounts of air and fuel that are delivered into the combustion chamber for each cycle. The AFR is an important parameter, the value of which should be kept within particular limits for ensuring proper operation of the engine. The significance of AFR control becomes even more prominent in gas-fuelled diesel engines, because the proper ignition and burning of gaseous fuel is more closely dependent on AFR than in engines that burn solely liquid fuel.

The amount of air is typically controlled with one or more waste gates that regulate the amount of exhaust gas that flows by the turbocharger and/or the amount of compressed intake air that is let out without making it flow into the cylinder. A straightforward approach involves controlling AFR through controlling the pressure of compressed intake air.

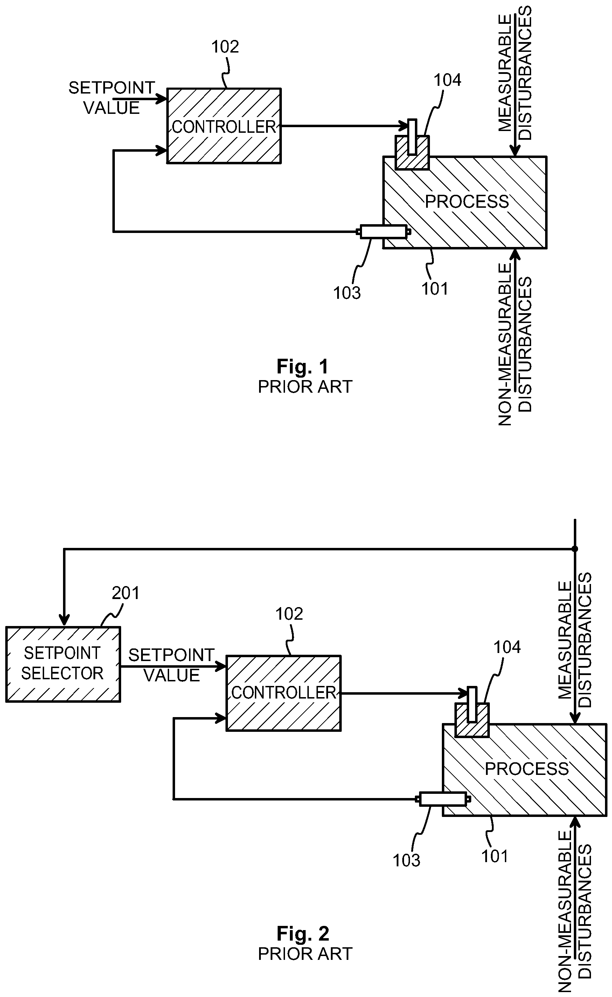

Feedback control may be applied to maintain the intake air pressure as close to a setpoint as possible. Fig 1 is a general schematic illustration of a process 101 and a controller 102 that applies feedback control. In this case we may assume that the process 101 is the compression of intake air. A sensor 103 monitors the state of the process 101 and produces a feedback value, which is an indicator of a measured dynamic quantity such as the current intake air pressure. The controller 102 compares the feedback value to a setpoint value and produces an output indicative of a result of the comparison. The output constitutes a control signal to an actuator 104, which in this example turns the waste gate(s). Typically the feedback control aims at maintaining the process 101 in a steady state, so that the output of the controller 102 is proportional to the difference between the feedback value and the setpoint value, and the effect of the actuator 104 is such that the change it causes in the state of the process 101 tends to drive the feedback value closer to the setpoint value.

Disturbances are factors that tend to change the state of the process 101. Measurable disturbances are those, the effects of which are known beforehand and/or can be measured online with reasonable accuracy. Additionally there are non-measurable disturbances, which may involve e.g. the mechanical wear of components in the process 101. The effect of non-measurable disturbances on the state of the process 101 are difficult, if not impossible, to predict.

Pure closed-loop feedback control such as in fig. 1 involves the inherent disadvantage that it only reacts to effects that have already taken place in the process, and thus involves certain latency. In the simplest form illustrated in fig. 1, where the setpoint value stays the same, it would be ill suited to AFR control, because e.g. a change in load and/or speed will cause a change in the amount of fuel, which necessitates a change in the amount of air as well.

Fig. 2 illustrates how this disadvantage can be at least partly dealt with by adding a setpoint selector that implements a certain element of feed-forward control. The control system shown in fig. 2 comprises, in addition to the elements explained above in association with fig. 1, a setpoint selector 201. It is configured to receive one or more input values that are indicative of the measurable disturbances. In this case they tell, how the load and/or speed are to be changed. The setpoint selector 201 may have the nature of a simple look-up table, which produces a new setpoint value based on the load and/or speed information. The change in the setpoint value begins to affect the control loop already before there is any measurable change in the feedback value.

The control approach of fig. 2 allows the control loop to react to measurable disturbances faster, but a problem with transient effects still remains. For example, let us assume a situation where a rapid increase in output power is desired. The desired new output power level will require delivering some particular amount of fuel and some particular amount of air to the cylinder. The increase in the amount of air can be implemented by making the turbocharger spin faster (i.e. by turning the exhaust side waste gate to the closing direction).

The spinning impeller of the turbocharger has considerable inertia, which means that during the change a considerable amount of energy will be used to increase its rotating speed. This transient energy requirement reduces temporarily the output energy that is available from the engine. If the new setpoint value was selected to correspond to steady-state output power after the change, the desired new output power will be reached only relatively slowly, after the new turbo spinning speed has been achieved and other transient energy requirements have been satisfied.

In related art, EP 1686251 A1 discloses systems and methods for using pedal position and/or pedal change rate in the fuel side and/or air side control of an engine. By knowing the pedal position and/or pedal rate, an engine controller may anticipate future fuel and/or air needs of the engine, and adjust the fuel profile and/or air profile to meet those anticipated needs. This may help improve the responsiveness, performance and emissions of the engine

### SUMMARY OF THE INVENTION

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

A method, control system, and an internal combustion engine would be needed in which the transient effects of load and/or speed changes on output power could be reduced in the framework of AFR control.

Advantageous objectives of the invention are achieved by using two-stage change-sensitive control, in which the selection of a setpoint is made dynamically during the change, and also the creation of an output signal to the actuator is made dynamically during the changes in setpoint value.

According to an embodiment of the present invention, an internal combustion engine comprising a regulator valve or valve system for regulating an amount of extra air to be forced into a combustion chamber and an AFR control system having an output coupled to actuate said regulator valve or valve system for controlling air to fuel ratio in the internal combustion engine are provided, the AFR control system comprising: a feedback controller configured to compare a measured air amount indicator to a setpoint value and to produce a feedback control output, a setpoint selector configured to select a steady-state setpoint value on the basis of known requirements of operation, a first transient controller configured to produce a transient setpoint offset as a response to a change in fuel demand of said internal combustion engine, and a second transient controller configured to produce a transient output offset as a response to a change in either said steady-state setpoint value or said setpoint value; wherein said setpoint value is a combination of said steady-state setpoint value and said transient setpoint offset, and wherein an output of the AFR control system is a combination of said feedback control output and said transient output offset.

According to another embodiment of the present invention, a method for actuating a regulator valve or valve system of an internal combustion engine for regulating an amount of extra air to be forced into a combustion chamber to control air to fuel ratio in the internal combustion engine is provided, the method comprising: comparing a measured air amount indicator to a setpoint value and producing a feedback control output, selecting a steady-state setpoint value on the basis of known requirements of operation, producing a transient setpoint offset as a response to a change in fuel demand of said internal combustion engine, and producing a transient output offset as a response to a change in either said steady-state setpoint value or said setpoint value; wherein said setpoint value is a combination of said steady-state setpoint value and said transient setpoint offset, and wherein an output for actuating said regulator valve or valve system is a combination of said feedback control output and said transient output offset.

The first stage of the change-sensitive control ensures that an intended change of setpoint value is made not just as a jump from one steady-state setpoint to another, but in accordance with a setpoint change curve that may temporarily "exaggerate" the required change in order to make it affect the process more rapidly. In an analogous manner the second stage of the change-sensitive control ensures that an output signal of the control arrangement may temporarily "over-react" to the changing setpoint value, which also has a proactive effect on the overall behavior of the controlled process.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF DRAWINGS

- Fig. 1: illustrates a prior art feedback control scheme,
- fig. 2: illustrates a known combination of feedback and setpoint selection,
- fig. 3: illustrates the principle of two-stage change-sensitive control in a system and a method,
- fig. 4: illustrates an embodiment of two-stage change-sensitive control in controlling the air to fuel ratio,
- fig. 5: illustrates an example of a first transient controller,
- fig. 6: illustrates an example of a second transient controller and
- fig. 7: illustrates a combination of signals.

### DETAILED DESCRIPTION OF EMBODIMENTS OF THE INVENTION

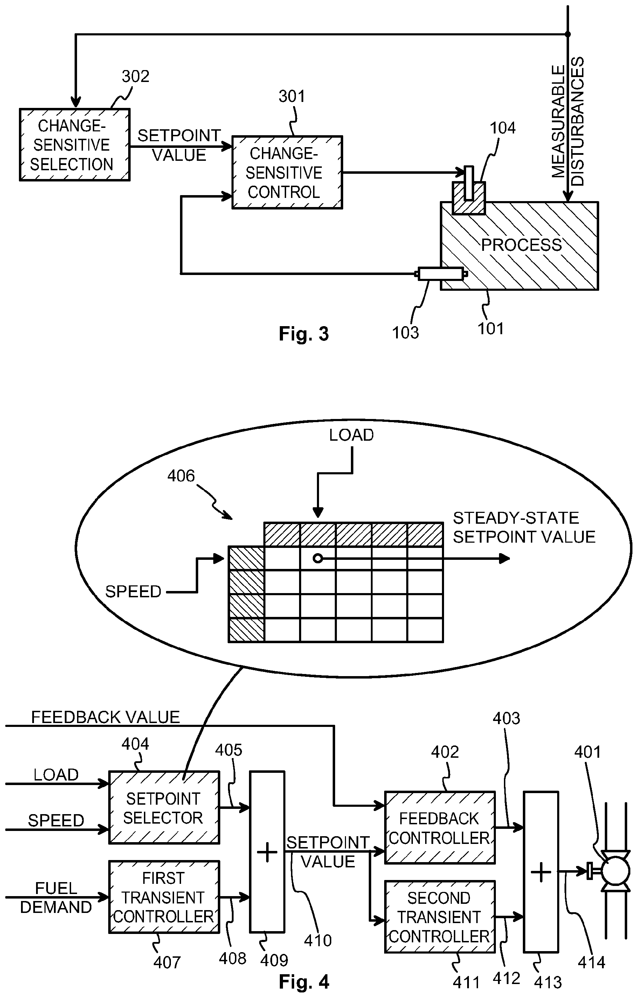

Fig. 3 illustrates schematically a principle of two-stage change-sensitive control. Fig. 3 can be examined as a schematic illustration of a method or an arrangement. An inner control loop comprises a change-sensitive controller 301, which includes functionalities of a feedback controller in the sense that it receives a measured indicator value from a sensor 103, compares it to a setpoint value, and produces a control output that affects the state of the controlled process 101 through an actuator 104. The control output is proportional to the difference found between the measured indicator value and the setpoint value, but this proportionality includes a certain sensitivity to change: during (and/or immediately after) a change in the setpoint value, a transient period occurs during which the proportionality differs from what it is during steady-state conditions. In particular, the change sensitivity of the controller 301 has been selected so that the control output directed to the actuator 104 proactively counteracts such effects that would otherwise delay the response of the process 101 to such change in operating conditions that the change in setpoint value represents.

The setpoint value comes to the change-sensitive controller 301 from a setpoint selector 302, which itself is also sensitive to change. The purpose of the setpoint selector 302 is to select, based on information about measurable disturbances that will act upon the process 101, a setpoint value so that each time the new setpoint value would drive the inner control loop to properly control the process 101 in accordance with the new measurable disturbances. Sensitivity to change means here a feature analogous to that explained above in relation to the controller 301: even if measurable disturbances would only change from one steady-state level to another, the selected setpoint does not just jump from an old steady-state setpoint to a new steady-state setpoint, but follows a transition pattern that aims at proactively compensating for delays and/or other unwanted transient effects that would otherwise occur in the process 101.

Fig. 4 shows an example of how the principle of two-stage change-sensitive control can be applied to control the air to fuel ratio in an internal combustion engine. The valve 401 that is schematically shown on the right in fig. 4 may be for example the waste gate of the turbine of a turbocharger, or the waste gate of a charge air inlet affecting intake manifold air pressure. In general we may speak of an actuator that is configured to control, directly or indirectly, the charge air pressure. A feedback controller 402 is configured to compare a measured air amount indicator, such as for example a measured charge air pressure, to a setpoint value. The measured air amount indicator is named simply a feedback value in fig. 4.

The feedback controller 402 is also configured to produce a feedback control output 403 that changes by an amount proportional to the difference that the feedback controller 402 found between the measured air amount indicator and the setpoint value. In this description the term proportional is not used in a strictly mathematical sense, which would only cover linear dependency through a constant of proportionality. Rather we mean that the feedback controller 402 is configured to produce a neutral output value (i.e. one that does not aim to change the current state of the controlled process) if the measured air amount indicator is equal to the setpoint value, and otherwise it produces an output value that tries to rectify the situation the harder, the further away the measured air amount indicator is from the setpoint value. This wide definition of proportionality includes for example exponential dependencies, dead zones around the exact value of the setpoint value, exaggerated output value cutoffs, and other known features of feedback control.

A setpoint selector 404 is configured to select a steady-state setpoint value 405 on the basis of known requirements of operation. For example, the setpoint selector 404 may take the form of a look-up table 406, from which a desired charge air pressure value is read as a function of the rotational speed that the engine should have under a particular load. It is typical to a setpoint selector, the task of which is to select a steady-state setpoint value, that each of its input values (i.e. those that describe the known requirements of operation) has a range of allowable values. In the look-up table representation of fig. 4 these are represented with the hatched boxes that give labels to the columns and rows of the look-up table. It is possible to find out - through testing, simulation, or a combination of both - the effect of each combination of requirements of operation that in practice could be encountered, so that an appropriate steady-state setpoint value can be selected and stored in the appropriate location in the look-up table.

A first transient controller 407 is configured to produce a transient setpoint offset 408 as a response to a change in fuel demand of the internal combustion engine. In this description the term "transient controller" means a controller that is specialized in reacting to changes (as opposed to controllers that act primarily upon steady-state inputs) and that produces an output that only lasts for the duration of the change, or at most a relatively short interval after the change. Later in this description we will provide examples of transient controllers.

A first combiner 409 is configured to produce a combination 410 of the steady-state setpoint value 405 and the transient setpoint offset 408. The combination may be a straightforward sum, or it may be some weighted sum, or it may involve more advanced combining features like conditional selection, filtering, clipping, and/or time-dependent weighing. In any case, the combination 410 of the steady-state setpoint value 405 and the transient setpoint offset 408 constitutes the setpoint value that is delivered to the feedback controller 402. Together the setpoint selector 404, the first transient controller 407, and the combiner 409 implement the functionalities that in fig. 3 were represented as the change-sensitive setpoint selector 302. Knowledge about load, speed, and fuel demand represent measurable disturbances that affect the state of the process, which in fig. 4 is the compression of intake air. Since the intake air pressure is an important factor of determining the air to fuel ratio, we may say more generally that the process to be controlled in fig. 4 is the delivery of air and fuel into the combustion chamber in appropriate proportions.

A second transient controller 411 receives the setpoint value from the first combiner 409 as an input, just like the feedback controller 402. The second transient controller 411 is configured to produce a transient output offset 412 as a response to a change in the setpoint value. A second combiner 413 is configured to produce a combination 414 of the feedback control output 403 and the transient output offset 412. This combination 414 constitutes the output of the AFR control system, and is used to actually turn the valve 401 (or, more generally, to drive the actuator that affects the state of the controlled process). The same generalizing remarks as above about the word "combination" apply also here. Together the feedback controller 402, the second transient controller 411, and the second combiner 413 implement the functionalities that in fig. 3 were represented as the change-sensitive controller 301.

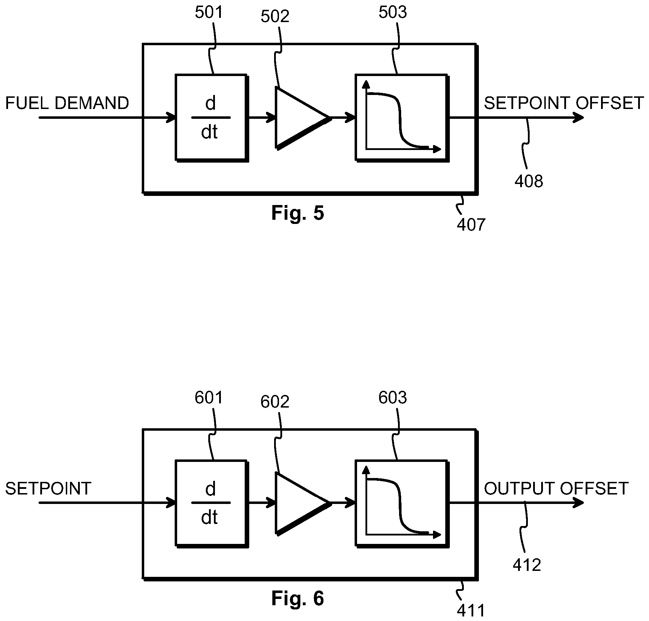

Fig. 5 illustrates one possible practical embodiment of a first transient controller 407. It comprises a first time derivative calculator 501 that is configured to produce a time derivative of the signal that represents current fuel demand. Significant advantages can be gained by not using any measured feedback value to represent current fuel demand, but an original control signal or command that also has an active role in driving the fuel delivery arrangement in the engine. A measured feedback signal would introduce an additional element of delay and reactiveness, while the original control signal or command is the quickest and most proactive way of getting the appropriate information. A first gain unit 502 is configured to weight the time derivative of the fuel demand, and a first low-pass filter 503 is configured to filter the weighted time derivative of fuel demand. Low-pass filtering helps to focus the effect of the first transient controller to actual changes in fuel demand, by filtering out fluctuations that only resulted from interference or other sources or error. The transient setpoint offset 408 is an output of the first low-pass filter 503.

As illustrated in fig. 6, an exemplary embodiment of the second transient controller 411 may resemble relatively closely that of the first transient controller 407. The second transient controller 411 of fig. 6 comprises a second time derivative calculator 601, which is configured to produce a time derivative of the setpoint value received from the first combiner 409 (see fig. 4). A second gain unit 602 is configured to weight said time derivative of setpoint value, and a second low-pass filter 603 is configured to filter the weighted time derivative of setpoint value, so that said transient output offset 412 is an output of said second low-pass filter. Both in the exemplary embodiment of fig. 6 and in the exemplary embodiment of fig. 5 the gain unit and the low-pass filter could switch places in the chain with little practical significance to the effect achieved.

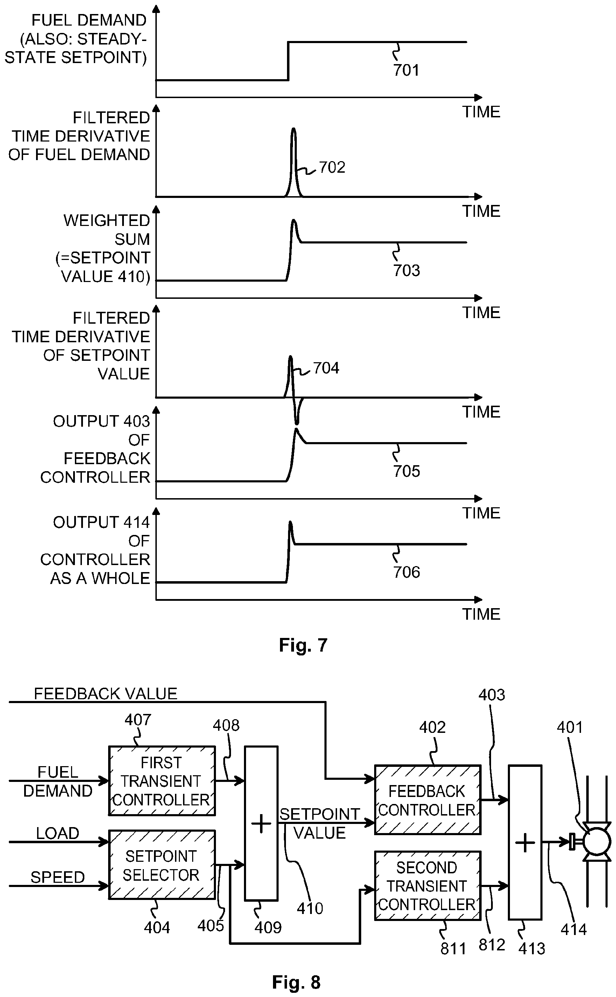

Fig. 7 illustrates an example of how the various signals could look like when an AFR controller of the kind shown in fig. 4 was used to increase charge air pressure. For simplicity we assume that the first transient controller 407 (see fig. 4) receives information that fuel demand increases abruptly, as illustrated by the topmost curve 701. An increase in fuel demand means a simultaneous increase in load and/or rotating speed, so the steady-state setpoint 405 at the output of the setpoint selector 404 would exhibit a similar, step-like increase with only as much delay as it takes for the setpoint selector to consult the look-up table and provide the resulting new steady-state setpoint at its output.

If the first transient controller 407 has an internal structure as illustrated in fig. 5, it calculates a time derivative of the fuel demand curve 701. The time derivative of an abruptly changing fuel demand constitutes a very sharp, very high peak, because in a strictly mathematical sense the time derivative would have an infinite value in one point and zero value everywhere else. A low-pass filtered time derivative has smoother form, but may still be a relatively narrow peak, as illustrated by the second curve 702 in fig. 7. If the combiner 409 is configured to apply weighted summing, the setpoint value 410 could follow the third curve 703: instead of just jumping from one steady-state setpoint value to another, the setpoint value increases temporarily more than just by the difference between the two steady-state setpoint values, and only thereafter settles upon the new steady-state setpoint value when the effect of the peak-formed transient setpoint offset 408 has died out.

The fourth curve 704 in fig. 4 illustrates a filtered time derivative of the setpoint value, as calculated in the second transient controller 411. The fifth curve 705 in turn illustrates how the feedback controller 402 could react to the changing setpoint value of fig. 703: it would strive to make the feedback value follow the setpoint value, by first increasing the output signal (i.e. turning the waste gate 401 in the closing direction) more than what the new steady-state setpoint value would require, and eventually arriving at a waste gate setting that produces the charge air pressure indicated by the new steady-state setpoint value.

The sixth curve 706 represents a weighted sum of the fourth and fifth curves, which in other words is what the second combiner 413 produces as an output 414 of the AFR control system. The effect of the two-way swing in the transient output offset illustrated with curve 704 is two-fold: it makes the initial increase in the weighted sum steeper, and attenuates the delayed tail of the upwards swing in curve 705. In general we may conclude that the AFR control system responds to an increase in fuel demand (which is synonymous with a desired increase in load or rotating speed) by quickly closing the waste gate to a somewhat exaggerated extent, and then relatively quickly stabilizing the waste gate setting to a level that is appropriate under the new operating conditions. The initial exaggeration in closing the waste gate produces just as much additional charge air pressure as is needed to overcome the delays that would otherwise be inherent in the case of responding to an increased load and/or rotating speed requirement.

Fig. 8 illustrates an alternative embodiment of two-stage change-sensitive control. Components and functionalities that are essentially the same as in fig. 4 are the feedback controller 402, the setpoint selector 404, the first transient controller 407, the first combiner 409, and the second combiner 413. The setpoint selector 404 and the first transient controller 407 are only shown in flipped order for reasons of graphical clarity, because as a difference to fig. 4, the second transient controller 811 does not take its input from the setpoint value 410 produced by the first combiner 409, but directly from the steady-state setpoint 405 produced by the setpoint selector 404. If the second transient controller 811 applies the same principle of time derivative calculation, amplification, and low-pass filtering as the example shown above in fig. 6, the transient output offset 812 will resemble the single peak of curve 702 instead of the two-way swing of curve 704 in a situation where only a single abrupt change in the steady-state setpoint value takes place.

The physical implementation of an AFR control system according to an embodiment of the invention can take place as a part of a ECU (Engine Control Unit), a part of a CCM (cylinder control module) or an ECM (engine control module) of the internal combustion engine. It is known to include in an ECU, in a CCM or an ECM programmable devices, such as for example microcontrollers, microprocessors, and/or programmable logic arrays. Based on the description given above, a person skilled in the art is capable of programming such a programmable device so that running the program in the form of machine-readable instructions makes the programmable device execute a method according to an embodiment of the invention.

Variations and modifications to the embodiments described above are possible without departing from the scope of the amended claims. For example, instead of fuel demand, the input signal to the first transient controller 407 could be engine Load, cylinder pressure (e.g calculated IMEP) or other signals indicative of the operating state e.g. start of combustion.

## Claims

1. An internal combustion engine comprising a regulator valve (401) or valve system to regulate an amount of extra air to be forced into a combustion chamber, and an AFR control system having an output (414) coupled to actuate said regulator valve (401) or valve system to control air to fuel ratio in the internal combustion engine, the AFR control system comprising:
- a feedback controller (402) configured to compare a measured air amount indicator to a setpoint value (410) and to produce a feedback control output (403),
- a setpoint selector (404) configured to select a steady-state setpoint value (405) on the basis of known requirements of operation,
- a first transient controller (407) configured to produce a transient setpoint offset (408) as a response to a change in fuel demand of said internal combustion engine, and
- a second transient controller (411, 811) configured to produce a transient output offset (412, 812) as a response to a change in either said steady-state setpoint value (405) or said setpoint value (410);
wherein said setpoint value (410) is a combination of said steady-state setpoint value (405) and said transient setpoint offset (408), and wherein an output (414) of the AFR control system is a combination of said feedback control output (403) and said transient output offset (412, 812).

2. An internal combustion engine according to claim 1, wherein said first transient controller (407) comprises a first time derivative calculator (501) configured to produce a time derivative of said fuel demand, a first gain unit (502) configured to weight said time derivative of fuel demand, and a first low-pass filter (503) configured to filter the weighted time derivative of fuel demand, so that said transient setpoint offset (408) is an output of said first low-pass filter (503).

3. An internal combustion engine according to claim 1 or 2, wherein said second transient controller (411) comprises a second time derivative calculator (601) configured to produce a time derivative of said setpoint value, a second gain unit (602) configured to weight said time derivative of setpoint value, and a second low-pass filter (603) configured to filter the weighted time derivative of setpoint value, so that said transient output offset (412) is an output of said second low-pass filter (603).

4. An internal combustion engine according to any of claims 1 to 3, wherein said regulator valve (401) or valve system comprises at least one of the following: a waste gate of the turbine of a turbocharger, a waste gate of a charge air inlet.

5. A method for actuating a regulator valve (401) or valve system of an internal combustion engine for regulating an amount of extra air to be forced into a combustion chamber to control air to fuel ratio in the internal combustion engine, the method comprising:
- comparing (402) a measured air amount indicator to a setpoint value (410) and producing a feedback control output (403),
- selecting (404) a steady-state setpoint value (405) on the basis of known requirements of operation,
- producing (407) a transient setpoint offset (408) as a response to a change in fuel demand of said internal combustion engine, and
- producing (411, 811) a transient output offset (412, 812) as a response to a change in either said steady-state setpoint value (405) or said setpoint value (410);
wherein said setpoint value (410) is a combination of said steady-state setpoint value (405) and said transient setpoint offset (408), and wherein an output (414) for actuating said regulator valve (401) or valve system is a combination of said feedback control output (403) and said transient output offset (412, 812).

## Patentansprüche

1. Verbrennungsmotor, der ein Regelventil (401) oder Ventilsystem zum Regeln einer Menge zusätzlicher Luft umfasst, die in eine Brennkammer gedrückt werden soll, und ein AFR-Steuersystem mit einem Ausgang (414), der zum Betätigen des Regelventils (401) oder Ventilsystems zum Steuern des Luft-Kraftstoff-Verhältnisses im Verbrennungsmotor gekoppelt ist, wobei das AFR-Steuersystem Folgendes umfasst:
- einen Rückkopplungsregler (402), der zum Vergleichen eines gemessenen Luftmengenindikators mit einem Sollwert (410) und zum Erzeugen eines Rückkopplungssteuerausgangs (403) konfiguriert ist,
- einen Sollwertwähler (404), der dazu konfiguriert ist, einen stationären Sollwert (405) auf der Grundlage bekannter Betriebsanforderungen auszuwählen,
- einen ersten Übergangsregler (407), der dazu konfiguriert ist, einen Übergangssollwertversatz (408) als Reaktion auf eine Änderung des Kraftstoffbedarfs des Verbrennungsmotors zu erzeugen, und
- einen zweiten Übergangsregler (411, 811), der dazu konfiguriert ist, einen Übergangsausgangsversatz (412, 812) als Reaktion auf eine Änderung entweder des stationären Sollwerts (405) oder des Sollwerts (410) zu erzeugen;
wobei der Sollwert (410) eine Kombination aus dem stationären Sollwert (405) und dem Übergangssollwertversatz (408) ist, und wobei ein Ausgang (414) des AFR-Steuersystems eine Kombination aus dem Rückkopplungssteuerausgang (403) und dem Übergangsausgangsversatz (412, 812) ist.

2. Verbrennungsmotor nach Anspruch 1, wobei der erste Übergangsregler (407) einen ersten Zeitableitungsrechner (501), der dazu konfiguriert ist, eine Zeitableitung des Kraftstoffbedarfs zu erzeugen, eine erste Verstärkungseinheit (502), die dazu konfiguriert ist, die Zeitableitung des Kraftstoffbedarfs zu gewichten, und einen ersten Tiefpassfilter (503), der dazu konfiguriert ist, die gewichtete Zeitableitung des Kraftstoffbedarfs zu filtern, umfasst, so dass der Übergangssollwertversatz (408) ein Ausgang des ersten Tiefpassfilters (503) ist.

3. Verbrennungsmotor nach Anspruch 1 oder 2, wobei der zweite Übergangsregler (411) einen zweiten Zeitableitungsrechner (601), der zum Erzeugen einer Zeitableitung des Sollwerts konfiguriert ist, eine zweite Verstärkungseinheit (602), die zum Gewichten der Zeitableitung des Sollwerts konfiguriert ist, und einen zweiten Tiefpassfilter (603), der zum Filtern der gewichteten Zeitableitung des Sollwerts konfiguriert ist, umfasst, so dass der Übergangsausgangsversatz (412) ein Ausgang des zweiten Tiefpassfilters (603) ist.

4. Verbrennungsmotor nach einem der Ansprüche 1 bis 3, wobei das Regelventil (401) oder Ventilsystem mindestens eines der folgenden umfasst: ein Wastegate der Turbine eines Turboladers, ein Wastegate eines Ladelufteinlasses.

5. Verfahren zum Betätigen eines Regelventils (401) oder Ventilsystems eines Verbrennungsmotors zum Regeln einer Menge zusätzlicher Luft, die in eine Brennkammer gedrückt werden soll, um das Luft-Kraftstoff-Verhältnis im Verbrennungsmotor zu steuern, wobei das Verfahren Folgendes umfasst:
- Vergleichen (402) eines gemessenen Luftmengenindikators mit einem Sollwert (410) und Erzeugen eines Rückkopplungssteuerausgangs (403),
- Auswählen (404) eines stationären Sollwerts (405) auf der Grundlage bekannter Betriebsanforderungen,
- Erzeugen (407) eines Übergangssollwertversatzes (408) als Reaktion auf eine Änderung des Kraftstoffbedarfs des Verbrennungsmotors, und
- Erzeugen (411, 811) eines Übergangsausgangsversatzes (412, 812) als Reaktion auf eine Änderung entweder des stationären Sollwerts (405) oder des Sollwerts (410); wobei der Sollwert (410) eine Kombination aus dem stationären Sollwert (405) und dem Übergangssollwertversatz (408) ist, und wobei ein Ausgang (414) zum Betätigen des Regelventils (401) oder Ventilsystems eine Kombination aus dem Rückkopplungssteuerungsausgang (403) und dem Übergangsausgangsversatz (412, 812) ist.

## Revendications

1. Moteur à combustion interne comprenant une soupape de régulation (401) ou un système de soupape pour réguler une quantité d'air supplémentaire à introduire dans une chambre de combustion, et un système de commande AFR présentant une sortie (414) couplée pour actionner ladite soupape de régulation (401) ou ledit système de soupape pour commander le rapport air/carburant dans le moteur à combustion interne, le système de commande AFR comprenant :
- un dispositif de commande de rétroaction (402) configuré pour comparer un indicateur de quantité d'air mesuré à une valeur de consigne (410) et pour produire une sortie de commande de rétroaction (403),
- un sélecteur de point de consigne (404) configuré pour sélectionner une valeur de point de consigne à l'état stable (405) sur la base d'exigences de fonctionnement connues,
- un premier dispositif de commande transitoire (407) configuré pour produire un décalage de point de consigne transitoire (408) en réponse à un changement de la demande en carburant dudit moteur à combustion interne, et
- un second dispositif de commande transitoire (411, 811) configuré pour produire un décalage de sortie transitoire (412, 812) en réponse à un changement de soit ladite valeur de consigne à l'état stable (405) ou soit de ladite valeur de consigne (410) ;
dans lequel ladite valeur de consigne (410) est une combinaison de ladite valeur de consigne à l'état stable (405) et dudit décalage de consigne transitoire (408), et dans lequel une sortie (414) du système de commande AFR est une combinaison de ladite sortie de commande de rétroaction (403) et dudit décalage de sortie transitoire (412, 812).

2. Moteur à combustion interne selon la revendication 1, dans lequel ledit premier dispositif de commande transitoire (407) comprend un premier calculateur de dérivée temporelle (501) configuré pour produire une dérivée temporelle de ladite demande en carburant, une première unité de gain (502) configurée pour pondérer ladite dérivée temporelle de la demande en carburant, et un premier filtre passe-bas (503) configuré pour filtrer la dérivée temporelle pondérée de la demande en carburant, de sorte que ledit décalage de point de consigne transitoire (408) soit une sortie dudit premier filtre passe-bas (503).

3. Moteur à combustion interne selon la revendication 1 ou 2, dans lequel ledit second dispositif de commande transitoire (411) comprend un second calculateur de dérivée temporelle (601) configuré pour produire une dérivée temporelle de ladite valeur de consigne, une seconde unité de gain (602) configurée pour pondérer ladite dérivée temporelle de la valeur de consigne, et un second filtre passe-bas (603) configuré pour filtrer la dérivée temporelle pondérée de la valeur de consigne, de sorte que ledit décalage de sortie transitoire (412) soit une sortie dudit second filtre passe-bas (603).

4. Moteur à combustion interne selon l'une quelconque des revendications 1 à 3, dans lequel ladite soupape de régulation (401) ou ledit système de soupape comprend au moins l'un des éléments suivants : une valve de décharge de la turbine d'un turbocompresseur, une valve de décharge d'une admission d'air de suralimentation.

5. Procédé d'actionnement d'une soupape de régulation (401) ou d'un système de soupape d'un moteur à combustion interne pour réguler une quantité d'air supplémentaire à introduire dans une chambre de combustion pour commander le rapport air/carburant dans le moteur à combustion interne, le procédé comprenant :
- la comparaison (402) d'un indicateur de quantité d'air mesuré à une valeur de consigne (410) et la production d'une sortie de commande de rétroaction (403),
- la sélection (404) d'une valeur de consigne à l'état stable (405) sur la base d'exigences de fonctionnement connues,
- la production (407) d'un décalage de consigne transitoire (408) en réponse à un changement de la demande en carburant dudit moteur à combustion interne, et
- la production (411, 811) d'un décalage de sortie transitoire (412, 812) en réponse à un changement de ladite valeur de consigne à l'état stable (405) ou de ladite valeur de consigne (410) ;
dans lequel ladite valeur de consigne (410) est une combinaison de ladite valeur de consigne à l'état stable (405) et dudit décalage de consigne transitoire (408), et dans lequel une sortie (414) permettant d'actionner ladite soupape de régulation (401) ou ledit système de soupape est une combinaison de ladite sortie de commande de rétroaction (403) et dudit décalage de sortie transitoire (412, 812).
